# EUROPÄISCHE PATENTANMELDUNG

(11) **EP 1 348 515 A1**
(43) Veröffentlichungstag der Anmeldung: **01.10.2003**
(21) Anmeldenummer: 03006431.5
(22) Anmeldetag: 21.03.2003
(51) Int. Cl.: B23Q 5/04, B23Q 16/00

(54) **Werkzeugmaschine**

(30) Priorität: 22.03.2002 DE 10213777
(71) Anmelder: Traub Drehmaschinen GmbH, 73262 Reichenbach (DE)
(72) Erfinder: Baumann, Ulrich, 73252 Lenningen (DE)
(74) Vertreter: Hoeger, Stellrecht & Partner

(57) **Zusammenfassung**

Um eine Werkzeugmaschine umfassend einen Werkzeugträger (34) mit einem um eine Achse drehbar gelagerten Werkzeugträgerkopf, welcher einen Trägerkörper mit einer Vielzahl von Werkzeugaufnahmen aufweist, in welche antreibbare Werkzeugeinheiten so einsetzbar sind, daß Zahnritzel (90) zum Antrieb aller in die Werkzeugaufnahmen einsetzbaren Werkzeugeinheiten in einem Innenraum des Trägerkörpers auf einer um die Achse (64) herum verlaufenden Umlaufbahn (100) angeordnet und bewegbar sind, derart zu verbessern, daß von den Werkzeugeinheiten ein Teil selektiv antreibbar ist, wird vorgeschlagen, daß ein Antriebsrad um eine Antriebsachse (126) drehbar ist, die nichtkoaxial zur Achse (64) angeordnet ist, daß sich eine Verzahnung (132) des Antriebsrads auf einer Flugbahn (140) bewegt, die so verläuft, daß in einem Antriebsabschnitt (142) der Umlaufbahn (100) die Abstände zwischen dieser und der Flugbahn (140) die geringsten Werte aufweisen und in allen anderen Abschnitten der Umlaufbahn (100) größer sind und daß die Verzahnung (132) mit einem in dem Antriebsabschnitt (142) stehenden Zahnritzel (90) in Antriebseingriff steht sowie zu jedem außerhalb des Antriebsabschnitts stehenden Zahnritzel (90) berührungslos verläuft.

## Beschreibung

Die Erfindung betrifft eine Werkzeugmaschine umfassend ein Maschinengestell, einen Werkzeugträger mit einem Werkzeugträgergehäuse und einen um eine Achse drehbar am Werkzeugträgergehäuse gelagerten Werkzeugträgerkopf, welcher einen Trägerkörper mit einer Vielzahl von Werkzeugaufnahmen aufweist, in welche antreibbare Werkzeugeinheiten so einsetzbar sind, daß Zahnritzel zum Antrieb aller in die Werkzeugaufnahmen einsetzbaren Werkzeugeinheiten in einem Innenraum des Trägerkörpers auf einer um die Achse herum verlaufenden Umlaufbahn angeordnet sind und beim Drehen des Werkzeugträgerkopfes auf der Umlaufbahn bewegbar sind, einen Werkzeugantrieb mit einem in dem Innenraum des Trägerkörpers angeordneten und durch einen Antriebsmotor antreibbaren Antriebsrad, mit welchem mindestens eines der Zahnritzel antreibbar ist.

Derartige Werkzeugmaschinen sind beispielsweise aus der deutschen Patentanmeldung 199 19 238 A1 bekannt.

Bei diesen Lösungen besteht das Problem, daß das Antriebsrad ständig alle auf der Umlaufbahn vorhandenen Zahnritzel gemeinsam antreibt, so daß dann, wenn einzelne Werkzeugeinheiten nicht angetrieben werden sollen, die Notwendigkeit besteht, Kupplungen vorzusehen.

Der Erfindung liegt daher die Aufgabe zugrunde, eine Werkzeugmaschine der gattungsgemäßen Art derart zu verbessern, daß von den Werkzeugeinheiten ein Teil in einfacher Weise selektiv antreibbar ist.

Diese Aufgabe wird bei einer Werkzeugmaschine der eingangs beschriebenen Art erfindungsgemäß dadurch gelöst, daß das Antriebsrad um eine Antriebsachse drehbar ist, die nichtkoaxial zur Achse angeordnet ist, daß sich eine Verzahnung des Antriebsrades auf einer Flugbahn um die Antriebsachse bewegt, die relativ zur Umlaufbahn der Zahnritzel so verläuft, daß in einem Antriebsabschnitt der Umlaufbahn die Abstände zwischen dieser und der Flugbahn die geringsten Werte aufweisen und in allen anderen Abschnitten der Umlaufbahn größer sind, und daß die Verzahnung mit einem in dem Antriebsabschnitt stehenden Zahnritzel in Antriebseingriff steht sowie zu jedem außerhalb des Antriebsabschnitts auf der Umlaufbahn stehenden Zahnritzel berührungslos verläuft.

Der Vorteil der erfindungsgemäßen Lösung ist darin zu sehen, daß durch die spezielle Anordnung der Flugbahn der Verzahnung relativ zur Umlaufbahn der Zahnritzel die Möglichkeit geschaffen wurde, durch die Festlegung des Antriebsabschnitts lediglich einen Teil der auf der Umlaufbahn vorhandenen Zahnritzel anzutreiben und so beispielsweise durch Drehen des Revolverkopfs die Möglichkeit besteht, die Zahnritzel auszuwählen, die dadurch, daß sie auf der Umlaufbahn in den Antriebsabschnitt hinein bewegt werden, mit dem Antriebsrad in Eingriff kommen und folglich angetrieben werden, während alle übrigen, außerhalb des Antriebsabschnitts stehenden Zahnritzel zwangsläufig nicht angetrieben werden.

Damit besteht in einfacher Art und Weise die Möglichkeit, ohne zusätzliche Maßnahmen, wie Kupplungen etc., nur die Zahnritzel ausgewählter Werkzeugeinheiten anzutreiben, einfach dadurch, daß diese auf der Umlaufbahn in dem Antriebsabschnitt zum Liegen kommen.

Grundsätzlich besteht die Möglichkeit, den Antriebsabschnitt beliebig zu positionieren. Insbesondere besteht die Möglichkeit, den Antriebsabschnitt an unterschiedlichen Stellen der Umlaufbahn zu positionieren, um dadurch eine große Flexibilität bezüglich der anzutreibenden Zahnritzel zu erreichen. Hierzu ist die Möglichkeit einer Änderung der relativen Lage der Flugbahn zur Umlaufbahn vorzusehen.

Eine aufgrund ihrer Einfachheit besonders günstige Ausführungsform sieht vor, daß der Revolverkopf für jede in einer der Werkzeugaufnahmen einsetzbare angetriebene Werkzeugeinheit dieselben Arbeitsstellungen aufweist und daß bei jeder in diesen Arbeitsstellungen stehenden Werkzeugeinheit deren Zahnritzel innerhalb des Antriebsabschnitts steht. Damit ist zwangsläufig sichergestellt, daß dann, wenn die Werkzeugeinheit in ihrer Arbeitsstellung steht, das Antriebsritzel durch das Antriebsrad antreibbar ist.

Bei dieser Lösung besteht die Möglichkeit, als Antriebsstellung nicht um eine einzige Drehstellung des Werkzeugträgerkopfes vorzusehen, sondern es besteht immer noch die Möglichkeit, mehrere innerhalb eines Winkelbereichs liegende Drehstellungen als Arbeitsstellungen vorzusehen, so daß die Drehung des Werkzeugträgerkopfes innerhalb der Arbeitsstellungen definierenden Winkelbereichs unterschiedliche Ausrichtungen der Werkzeugeinheit zum Werkstück zuläßt.

Eine aufgrund ihrer Einfachheit besonders bevorzugte Lösung sieht vor, daß jede Werkzeugeinheit des Werkzeugträgerkopfes eine durch eine feste Winkelposition definierte Arbeitsstellung aufweist, in welcher das Zahnritzel auf der Umlaufbahn in einer Umlaufstation steht, und daß mindestens die Umlaufstation innerhalb des Antriebsabschnitts liegt.

Diese Lösung hat den Vorteil, daß durch das Festlegen einer einzigen Arbeitsstellung das Zahnritzel stets innerhalb des Antriebsabschnitts an derselben Stelle steht und somit eindeutig definierbare Antriebsverhältnisse, insbesondere hinsichtlich der Realisierung der erforderlichen Präzision beim Antrieb der Werkzeugeinheit vorliegen.

Besonders vorteilhaft ist es dabei, wenn nur eine einzige Umlaufstation innerhalb des Antriebsabschnitts liegt.

Hinsichtlich der geometrischen Realisierung der erfindungsgemäßen Lösung wurden bislang keine detaillierten Angaben gemacht. So sieht ein vorteilhaftes Ausführungsbeispiel vor, daß die Zahnritzel so angeordnet sind, daß deren Zahnritzelachsen die Achse schneiden.

Besonders günstig ist es, wenn die Zahnritzelachsen in einem gemeinsamen Zahnritzelachsenschnittpunkt miteinander die Achse schneiden.

Hinsichtlich der Lage der Antriebsachse für das Antriebsrad und der Achse, um welche der Werkzeugträgerkopf drehbar ist, wurden bislang keine näheren Angaben gemacht. So sieht ein besonders vorteilhaftes Ausführungsbeispiel vor, daß die Antriebsachse parallelversetzt zu der Achse, um welche der Werkzeugträgerkopf drehbar ist, angeordnet ist.

Eine andere alternative Lösung sieht vor, daß die Antriebsachse in einem Winkel zu der Achse verläuft, um welche der Werkzeugträgerkopf drehbar ist.

Vorzugsweise ist dabei vorgesehen, daß sich die Antriebsachse und die Achse in einem Antriebsachsenschnittpunkt schneiden.

Besonders günstige geometrische Verhältnisse sind dann erreichbar, wenn der Antriebsachsenschnittpunkt und der Zahnritzelachsenschnittpunkt zusammenfallen.

Ferner wurde die Lage der Antriebsachse relativ zum Antriebsabschnitt nicht näher definiert. So sieht eine besonders günstig realisierbare Lösung vor, daß der das Antriebsrad durchsetzende Bereich der Antriebsachse auf einer dem Antriebsabschnitt der Umlaufbahn zugewandten Seite der Achse, um welche der Werkzeugträgerkopf drehbar ist, verläuft.

Besonders günstig sind die geometrischen Verhältnisse ferner dann, wenn die Antriebsachse und die Achse, um welche der Werkzeugträgerkopf drehbar ist, in einer Ebene liegen.

Diese Ebene ist vorzugsweise relativ zum Achsensystem der Werkzeugmaschine so orientiert, daß sie parallel zur X-Achse der Werkzeugmaschine verläuft.

Bei der erfindungsgemäßen Lösung wird davon ausgegangen, daß die Verzahnung des Antriebsrads mit dem im Antriebsabschnitt stehenden Zahnritzel in Eingriff ist, es wird jedoch keinerlei Aussage darüber gemacht, wie das Ineingriffbringen des Zahnritzels mit der Verzahnung des Antriebsrades realisierbar sein soll.

Insbesondere ist dabei zu beachten, daß bei völlig undefinierter Ausrichtung des Zahnritzels zur Verzahnung beim Ineingriffbringen derselben Schäden durch undefinierte Kollisionen auftreten können.

Um zumindest grobe Kollision zu vermeiden, ist daher vorgesehen, daß der Werkzeugantrieb als durch eine Steuerung steuerbarer C-Achsenantrieb ausgebildet ist. Ein derartiger C-Achsenantrieb erlaubt es, das Antriebsrad in definierter Weise, beispielsweise mit der Drehung des Werkzeugträgerkopfes, mitzudrehen und somit zumindest unerwünschte Kollisionen derart zu verhindern, daß zwei stehende Verzahnungen, nämlich die Verzahnung des Antriebsrads und die des Antriebsritzels, beim Ineingriffbringen miteinander kollidieren.

Noch vorteilhafter ist es, wenn die Verzahnung des Antriebsrads und das mit dieser in Eingriff zu bringenden Zahnritzel vor dem Ineingriffbringen in eine definierte Drehstellung relativ zueinander bringbar sind, wobei diese definierte Drehstellung so gewählt ist, daß sie kollisionsmindernd ist.

Zum Erreichen einer derartigen definierten Drehstellung ist zweckmäßigerweise zusätzlich zum Antrieb des Antriebsrades mittels einer C-Achse eine Führung vorgesehen, welche beim Drehen des Werkzeugträgerkopfes das sich in die Verzahnung des Antriebsrades hineinbewegende Zahnritzel so vorpositioniert, daß es im wesentlichen kollisionsfrei mit der Verzahnung des Antriebsrades in Eingriff bringbar ist.

Eine derartige Führung kann in unterschiedlichster Art und Weise ausgebildet sein. So kann diese beispielsweise so arbeiten, daß die Führung das Zahnritzel vor dem Ineingriffbringen mit der Verzahnung des Antriebsrads in eine definierte Drehstellung relativ zu der bekannten Ausrichtung der Verzahnung des Antriebsrades bringt.

Besonders vorteilhaft ist es dabei, wenn die Führung das Zahnritzel drehend mit der Verzahnung des Antriebsrades in Eingriff bringt. Diese Drehbewegung beim Ineingriffbringen von Zahnritzel und Verzahnung wirkt besonders kollisionsmindernd.

Die Führung kann dabei nur in Teilbereichen der Umlaufbahn wirksam sein, die sich an den Antriebsabschnitt anschließen, und in weiteren Teilbereichen der Umlaufbahn unwirksam sind, so daß in diesen weiteren Teilbereichen die Zahnritzel beliebige Drehstellungen oder, alternativ dazu, definierte Drehstellungen aufweisen können.

Eine besonders günstige Lösung sieht jedoch vor, daß jedes Zahnritzel beim Verlassen des Antriebsabschnitts und beim Eintreten in den Antriebsabschnitt jeweils eine Führungsübergabestellung durchläuft, und daß jedes Zahnritzel außerhalb des Antriebsabschnitts zwischen dem Durchlaufen der Führungsübergabestellungen in stets definierter Drehstellung zu diesen Führungsübergabestellungen steht.

Derartige definierte Drehstellungen zu den Führungsübergabestellungen lassen sich in besonders vorteilhafter Weise dadurch erreichen, daß eine Führung vorgesehen ist, die diese Drehstellungen aufrecht erhält.

Dies könnte beispielsweise dadurch realisiert sein, daß die Führung das Zahnritzel in der Führungsübergabestellung übernimmt, und diese Drehstellung des Zahnritzels bis zum Erreichen und Durchlaufen der nächsten Führungsübergabestellung beibehalten wird.

Dies würde jedoch erfordern, daß das Zahnritzel beim Verlassen des Antriebsabschnitts in der Führungsübergabestellung durch die Führung drehfest festgelegt wird und beim Hineinbewegen in den Antriebsabschnitt bei Durchlaufen der Führungsübergabestellung wieder hinsichtlich seiner Drehbewegung freigegeben wird.

Eine konstruktiv noch vorteilhafter zu realisierende Lösung sieht vor, daß das Zahnritzel durch die Führung definiert weitergedreht wird, so daß das Zahnritzel jeweils beim Erreichen der Führungsübergabestellung die für diese vorgesehene Drehstellung aufweist.

Vorzugsweise ist diese Führung drehfest gegenüber dem Werkzeugträgergehäuse angeordnet und somit nicht mit dem Werkzeugträgerkopf drehbar.

Im Zusammenhang mit der bisherigen Erläuterung der einzelnen Ausführungsbeispiele wurden keine näheren Angaben zur Anordnung des Antriebsrades und der Führung relativ zueinander gemacht.

Beispielsweise wäre es denkbar, das Antriebsrad auf einer Seite der Umlaufbahn anzuordnen, insbesondere der Zahnkranz auf der gegenüberliegenden Seite. Dies hat jedoch zur Folge, daß dann beim Ineingriffbringen der Zahnritzel mit der Führung ein synchrones Mitdrehen des Antriebsrades erforderlich ist.

Besonders günstig ist es daher, wenn das Antriebsrad und die Führung, insbesondere deren Zahnkranz, auf derselben Seite der Zahnritzel oder der Umlaufbahn der Zahnritzel angeordnet sind. Dabei besteht die Möglichkeit, die Führung, insbesondere deren Zahnkranz, auf einer dem Werkzeugträgergehäuse zugewandten Seite der Umlaufbahn oder einer dem Werkzeugträgergehäuse abgewandten Seite der Umlaufbahn anzuordnen.

Hinsichtlich der relativen Anordnung der Führung, das heißt insbesondere des Zahnkranzes der Führung und der Verzahnung des Antriebsrads wurde im Zusammenhang mit den bisherigen Ausführungsbeispielen keine näheren Angaben gemacht.

So ist es beispielsweise denkbar, die Verzahnung und den Zahnkranz im Antriebsabschnitt so anzuordnen, daß die Verzahnung auf einer der Antriebswelle zugewandten Seite des Zahnkranzes der Führung verläuft.

Diese Lösung ist insbesondere dann vorteilhaft, wenn die Verzahnung und der Zahnkranz auf einer dem Werkzeugträgergehäuse zugewandten Seite der Zahnritzel angeordnet sind.

Eine andere vorteilhafte Lösung sieht vor, daß im Antriebsabschnitt der Zahnkranz der Führung auf einer der Antriebswelle zugewandten Seite der Verzahnung verläuft, wobei diese Lösung insbesondere dann vorteilhaft ist, wenn der Zahnkranz und die Verzahnung auf einer dem Werkzeugträgergehäuse abgewandten Seite der Zahnritzel oder der Umlaufbahn angeordnet sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Ansicht eines ersten Ausführungsbeispiels einer erfindungsgemäßen Werkzeugmaschine in Richtung des Pfeils B in Fig. 2;
- Fig. 2: eine Draufsicht auf das erste Ausführungsbeispiel der erfindungsgemäßen Werkzeugmaschine in Richtung des Pfeils C in Fig. 1;
- Fig. 3: einen Schnitt längs Linie 3-3 in Fig. 1;
- Fig. 4: einen Schnitt längs Linie 4-4 in Fig. 3 mit ausschließlicher Darstellung einer Verzahnung einer Führung und von in diese eingreifenden Zahnritzeln;
- Fig. 5: eine vergrößerte Darstellung eines Bereichs D in Fig. 3;
- Fig. 6: eine Darstellung einer relativen Lage einer Umlaufbahn der Zahnritzel zu einer Flugbahn der Verzahnung;
- Fig. 7: eine vergrößerte Darstellung eines Schnitts längs Linie 7-7 in Fig. 5;
- Fig. 8: eine Draufsicht ähnlich Fig. 2 auf ein zweites Ausführungsbeispiel einer erfindungsgemäßen Werkzeugmaschine;
- Fig. 9: einen Schnitt ähnlich Fig. 3 des zweiten Ausführungsbeispiels der erfindungsgemäßen Werkzeugmaschine;
- Fig. 10: eine perspektivische vergrößerte Darstellung eines Bereichs E in Fig. 9,
- Fig. 11: einen Schnitt längs Linie 11-11 in Fig. 10 und
- Fig. 12: einen Schnitt ähnlich Fig. 9 durch ein drittes Ausführungsbeispiel einer erfindungsgemäßen Werkzeugmaschine.

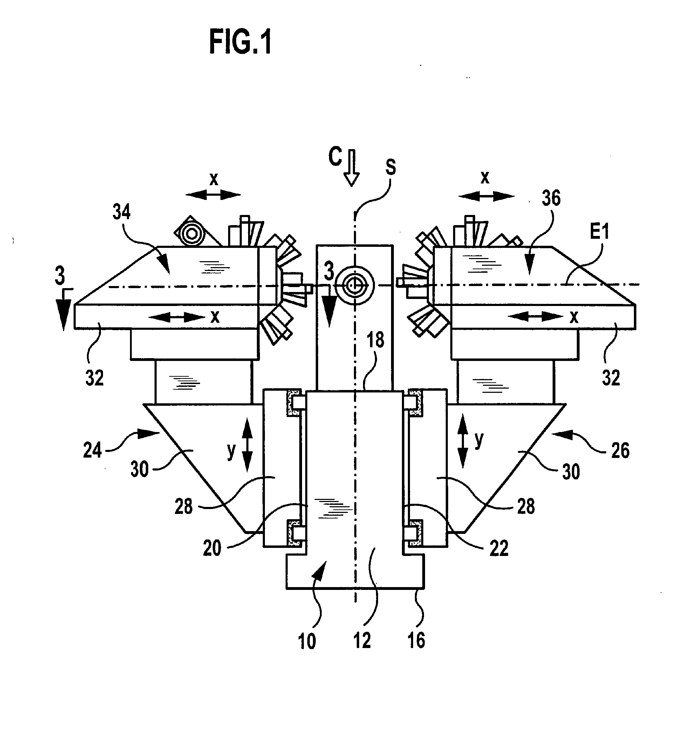

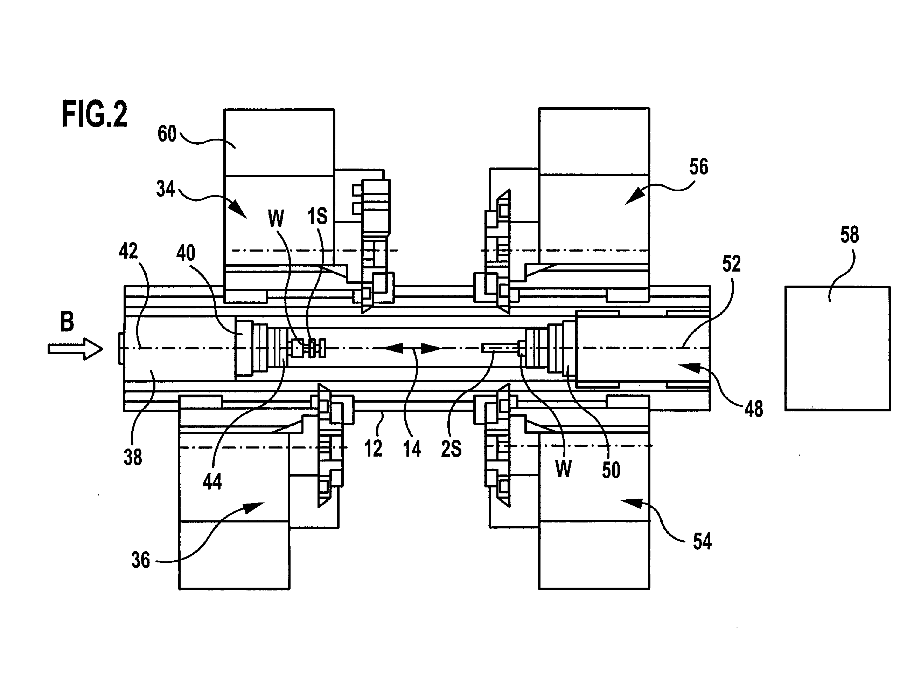

Ein in Fig. 1 und 2 dargestelltes erstes Ausführungsbeispiel einer erfindungsgemäßen Werkzeugmaschine umfaßt ein als Ganzes mit 10 bezeichnetes Maschinengestell mit einem Maschinenbettkörper 12, welcher sich, wie in Fig. 2 dargestellt, balkenähnlich in einer Längsrichtung 14 erstreckt. Der Maschinenbettkörper 12 weist eine Basisseite 16 auf, mit welchem der Maschinenbettkörper beispielsweise auf einem zeichnerisch nicht dargestellten Grundrahmen oder auf einer Stellfläche aufstellbar ist und eine Spindelträgerseite 18, die der Basisseite 16 gegenüberliegend am Maschinenbettkörper 12 angeordnet ist.

Zwischen der Basisseite 16 und der Spindelträgerseite 18 erstrecken sich beidseitig des Maschinenbettkörpers Schlittenträgerseiten 20 und 22, an welchen Schlittensysteme 24 bzw. 26 angeordnet und geführt sind, wobei jedes der Schlittensysteme 24, 26 einen Z-Schlitten 28, einen Y-Schlitten 30 und einen X-Schlitten 32 umfaßt, die in den üblichen X-, Y- und Z-Richtungen der Werkzeugmaschine bewegbar sind.

Jedes dieser Schlittensysteme 26, 28 trägt einen als Ganzes mit 34 bzw. 36 bezeichneten Werkzeugträger, wobei die Werkzeugträger 34, 36 auf gegenüberliegenden Seiten einer in einem Spindelgehäuse 38 gelagerten Arbeitsspindel 40 angeordnet sind, die ihrerseits um eine Spindelachse 42 drehbar in dem Spindelgehäuse 38 gelagert ist.

Die Arbeitsspindel 40 umfaßt ferner eine Werkstückaufnahme 44, in welcher ein Werkstück W gehalten ist, das beispielsweise auf seiner Seite 1S durch Werkzeuge der Werkzeugträger 34, 36 bearbeitbar ist.

Vorzugsweise ist die Werkzeugmaschine, wie in Fig. 2 dargestellt, als Gegenspindelmaschine aufgebaut, so daß auf dem Maschinenbettkörper 12 auf einer der ersten Arbeitsspindel 40 gegenüberliegenden Seite in einem zweiten Spindelgehäuse 48 eine zweite Arbeitsspindel 50 um eine zweite Spindelachse 52 drehbar gelagert ist, die vorzugsweise koaxial zur Spindelachse 42 ausrichtbar ist, und beiderseits der zweiten Arbeitsspindel 50 Werkzeugträger 54 und 56 angeordnet sind, die ähnlich oder identisch wie die Werkzeugträger 34 und 36 ausgebildet sein können.

Damit besteht die Möglichkeit, das Werkstück W beispielsweise nach einer Übergabe von der ersten Arbeitsspindel 40 in die zweite Arbeitsspindel 50 auf einer zweiten Seite 2S fertig zu bearbeiten.

Alle Bearbeitungen sind durch eine programmierbare Steuerung 58 steuerbar.

Eine derartige Werkzeugmaschine ist beispielsweise mit weiteren Einzelheiten aus der deutschen Patentanmeldung 100 48 291.0-14 beschrieben, auf welche hinsichtlich der einzelnen Merkmale dieser Werkzeugmaschine vollinhaltlich Bezug genommen wird.

Einer der Werkzeugträger 34, 36, 54, 56 umfaßt, wie beispielsweise anhand des Werkzeugträgers 34 erläutert, ein Werkzeugträgergehäuse 60, in welchem ein als Ganzes mit 62 bezeichneter Werkzeugträgerkopf um eine Achse 64 drehbar gehalten ist.

Die Lagerung des Werkzeugträgerkopfes 62 erfolgt dabei beispielsweise über ein Lagerrohr 66, welches sich in das Werkzeugträgergehäuse 60 hinein erstreckt und in diesem durch zwei Lager 68a, b drehbar gelagert ist.

Der Werkzeugträgerkopf 62 umfaßt seinerseits einen Trägerkörper 70, in welchem eine Vielzahl von Werkzeugaufnahmen 72 vorgesehen sind, in welche in ungefähr radialer Richtung zur Achse 64 Werkzeugeinheiten 74 für angetriebene Werkzeuge 76 einsetzbar sind.

Die Werkzeugeinheiten 74 umfassen vorzugsweise jeweils einen Werkzeughalter 78 mit einer Werkzeugspindel 80, die in einem Werkzeughaltergehäuse 82 um eine Werkzeugachse 84 drehbar gelagert ist.

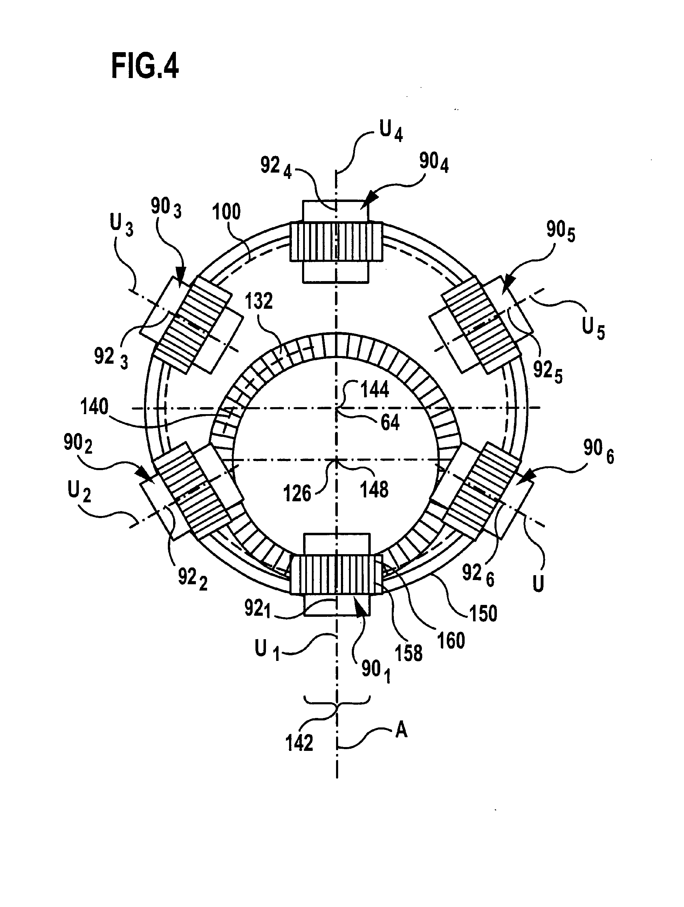

Zum Antrieb der Werkzeugeinheiten 74 sind diese mit Zahnritzeln 90 versehen, die um eine Zahnritzelachse 92 drehbar sind und bei in die Werkzeugaufnahmen 72 eingesetzten Werkzeugeinheiten 74 in einen Innenraum 94 des Trägerkörpers 70 hineinragen. Weist beispielsweise der Trägerkörper 70 sechs Werkzeugaufnahmen 72 auf und sind alle sechs Werkzeugaufnahmen 72 mit einer angetriebenen Werkzeugeinheit 74 bestückt, so ragen, wie in Fig. 4 dargestellt, in den Innenraum 94 insgesamt sechs Zahnritzel 90₁ bis 90₆ hinein, und alle sechs Zahnritzel 90₁ bis 90₆ sind so angeordnet, daß sie auf einer gemeinsamen, in Fig. 4 gepunktet dargestellten Umlaufbahn 100 liegen, die als Kreisbahn um die Achse 64 herum verläuft.

Ist beispielsweise der Werkzeugträgerkopf 62, mit sechs, vorzugsweise im gleichen Winkelabstand um die Achse 64 angeordneten Werkzeugaufnahmen 72 versehen, so ist der Werkzeugträgerkopf 62 in mindestens sechs Drehstellungen um die Achse 64 drehbar, wobei in jeder Drehstellung jeweils eines der Zahnritzel 90₁ bis 90₆ in einer der Umlaufstationen U₁ bis U₆ der Umlaufbahn 100 steht, wobei die Umlaufstationen U₁ bis U₆ relativ zum Werkzeugträgergehäuse 60 feststehend angeordnet sind. Beim Drehen des Werkzeugträgerkopfes 62 wandern die einzelnen Zahnritzel 91₁ bis 91₆ auf der Umlaufbahn 100 weiter, so daß die Zahnritzel 90₁ bis 90₆ von einer der Umlaufstationen U₁ bis U₆ in jede andere der Umlaufstationen U₁ bis U₆ bewegbar sind.

In jeder Drehstellung des Werkzeugträgerkopfes 62 ist mindestens eine der Werkzeugeinheiten 74 in einer Arbeitsstellung A, in welcher eine Bearbeitung des Werkstücks W erfolgt. Beispielsweise ist die Arbeitsstellung A des Werkzeugträgerkopfes 62 so gelegt, daß die in dieser stehende Werkzeugeinheit, beispielsweise die Werkzeugeinheit 74₁, dadurch, daß das Werkzeug 76₁ derselben in einer zur X-Richtung und zur Z-Richtung parallelen Ebene ausgerichtet ist, so daß dieses das Werkstück W bearbeiten kann, wobei das Zahnritzel 92₁ dieser Werkzeugeinheit 74₁ in diesem Fall in der Umlaufstation U₁ steht, wie in Fig. 4 dargestellt.

Soll eine der übrigen Werkzeugeinheiten 74 in die Arbeitsstellung A bewegt werden, so ist der Werkzeugträgerkopf 62 in eine derartige Drehstellung zu drehen, daß die entsprechende Werkzeugeinheit 74, beispielsweise die Werkzeugeinheit 74₄, in der Arbeitsstellung A steht, wobei in diesem Fall dann auch das Zahnritzel 90₄ in der Umlaufstation U₁ steht und nicht mehr, wie in Fig. 4 dargestellt, in der Umlaufstation U₄.

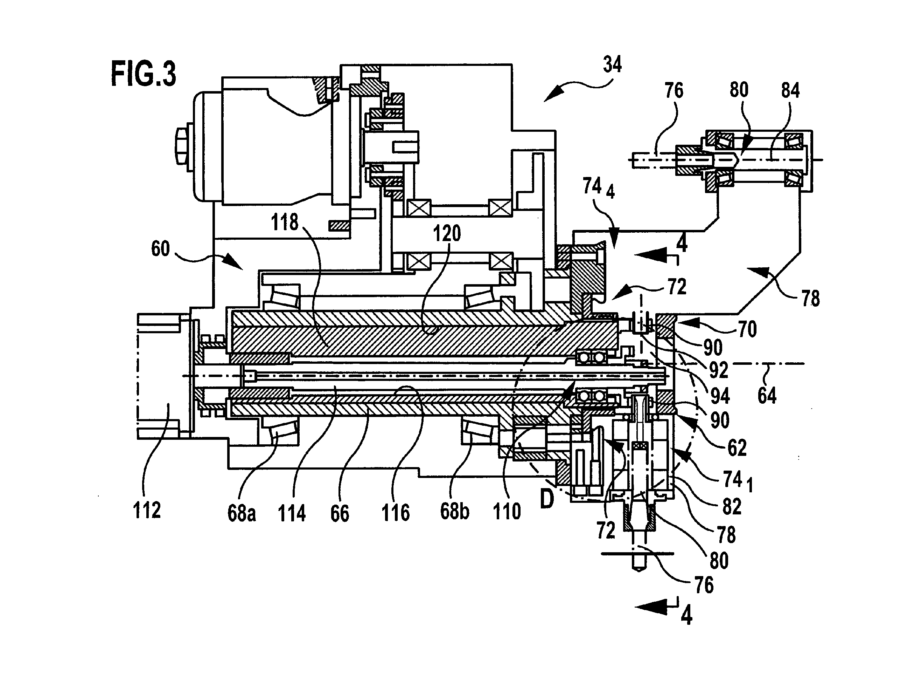

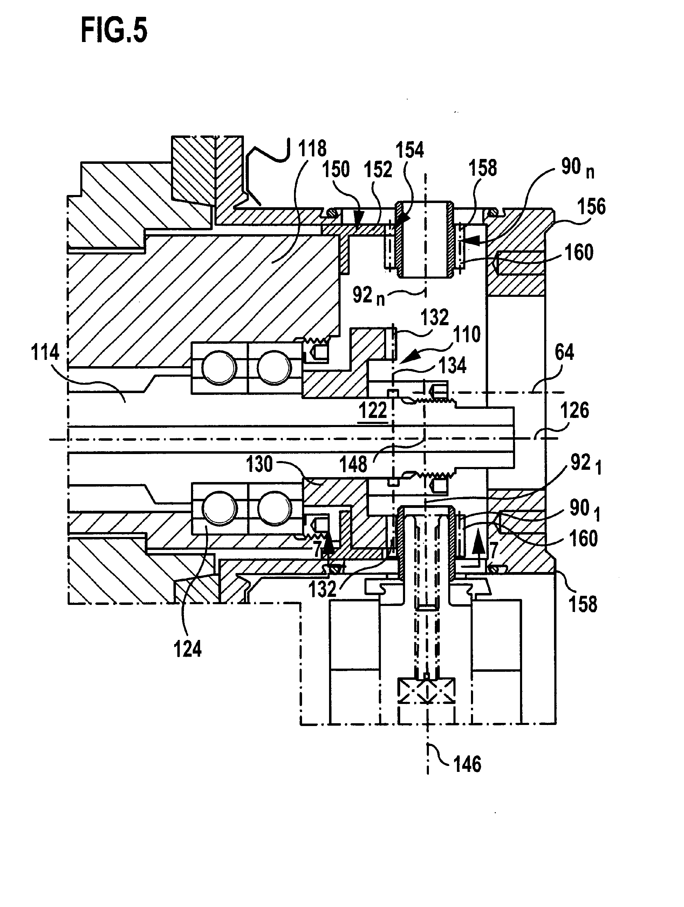

Zum Antrieb, zumindest der in der Arbeitsstellung A stehenden Werkzeugeinheiten 74 ist, wie in den Fig. 3, 4 und 5 dargestellt, ein als Ganzes mit 110 bezeichneter Werkzeugantrieb vorgesehen, welcher einen Antriebsmotor 112 aufweist, der am Werkzeugträgergehäuse 60 gelagert ist und eine Antriebswelle 114 antreibt, die einen Durchlaß 116 einer Lagerhülse 118 durchsetzt, die ihrerseits einen zentralen Durchlaß 120 des Lagerrohrs 66 durchgreift und drehbar an dem Lagerrohr 66 abgestützt ist, wobei die Lagerhülse 118 drehfest mit dem Werkzeugträgergehäuse 60 verbunden ist.

Innerhalb der Lagerhülse 118 ist die Antriebswelle 114 nahe ihres vorderen Endbereichs 122 mittels eines Drehlagers 124 drehbar gelagert, wobei eine Antriebsachse 126 parallel jedoch nicht koaxial zur Achse 64 verläuft, um welche der Werkzeugträgerkopf 62 gegenüber dem Werkzeugträgergehäuse 60 drehbar ist, sondern parallel versetzt im Abstand von dieser.

Auf dem Endbereich 122 der Antriebswelle 114 sitzt ein Antriebsrad 130, das vorzugsweise als Kronrad ausgebildet ist und eine Verzahnung 132 aufweist, die beispielsweise in einer senkrecht zur Antriebsachse 126 verlaufenden Ebene 134 liegt.

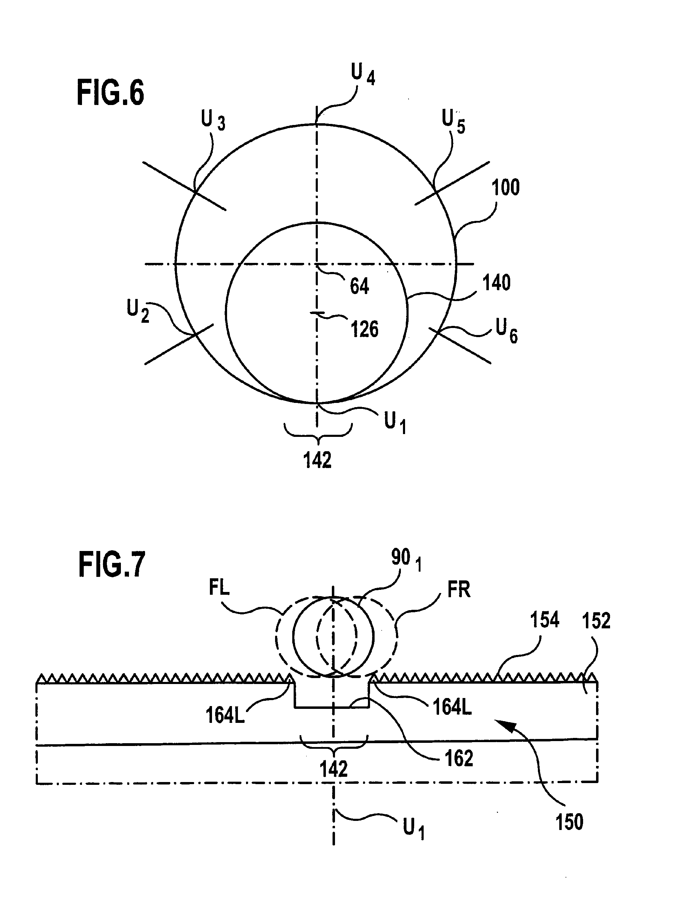

Die Verzahnung 132 bewegt sich beim Drehen des Antriebsrades 130 auf einer Flugbahn 140 um die Antriebsachse 126, wobei die Flugbahn 140 in einem Antriebsabschnitt 142 die geringsten Abstände von der Umlaufbahn 100 aufweist und in allen außerhalb des Antriebsabschnitts 142 liegenden Abschnitten der Umlaufbahn 100 einen größeren Abschnitt von dieser aufweist, wie in Fig. 6 dargestellt.

Ferner liegt der Antriebsabschnitt 142 so, daß innerhalb desselben die Umlaufstation U₁ liegt.

Somit wird jedes in der Umlaufstation U₁ stehende Zahnritzel 90, beispielsweise das in Fig. 4 dargestellte Zahnritzel 90₁, durch die Verzahnung 132 angetrieben.

Vorzugsweise verläuft die Flugbahn 140 der Verzahnung 132 ferner so, daß die Zahnritzel 90₂ und 90₆, die in den in beiden Umlaufrichtungen auf der Umlaufbahn 100 nächstbenachbarten Umlaufstationen U₂, U₆ stehen, nicht in Wechselwirkung mit der sich auf der Flugbahn 140 bewegenden Verzahnung 132 kommen, so daß diese Zahnritzel 90₂ und 90₆ durch die Verzahnung 132 des Antriebsrads 126 nicht angetrieben werden.

Wird nun der Werkzeugträgerkopf 62 um die Achse 64 gedreht, so daß beispielsweise das Zahnritzel 90₆ in die Umlaufstation U₁ bewegt wird, so verläßt gleichzeitig das Zahnritzel 90₁ die Umlaufstation U₁ und kommt in die Umlaufstation U₂, wodurch gleichzeitig das Zahnritzel 90₁ mit der Verzahnung 132 außer Eingriff kommt, während das Zahnritzel 90₆ bei Erreichen des Antriebsabschnitts 142 der Umlaufbahn 100 mit der Verzahnung 132 in Eingriff kommt und bei Erreichen der Umlaufstation U₁ voll mit der Verzahnung 132 voll in Eingriff steht.

Um möglichst günstige geometrische Verhältnisse zu erreichen, sind die Zahnritzel 90₁ bis 90₆ vorzugsweise so angeordnet, daß deren Zahnritzelachsen 92₁ bis 92₆ alle die Achse 64 schneiden und zwar vorzugsweise in einem gemeinsamen Zahnritzelachsenschnittpunkt 144, so daß die Zahnritzelachsen 92₁ bis 92₆ vorzugsweise in einer gemeinsamen, zur Achse 64 symmetrischen Fläche 146 liegen, wobei diese Fläche 146 im einfachsten Fall eine Ebene ist, die senkrecht zur Achse 64 verläuft.

Darüber hinaus verläuft, wie in Fig. 4 und Fig. 6 dargestellt, die Antriebsachse 126 so, daß das Zahnritzel, in diesem Fall das Zahnritzel 90₁, der in der Arbeitsstellung A stehenden Werkzeugeinheit 74 in der Umlaufstation U₁ steht und dabei dessen Zahnritzelachse 92₁ die Antriebsachse 126 in einem Antriebsstellungsschnittpunkt 148 schneidet.

Vorzugsweise liegen sowohl der Antriebsstellungsschnittpunkt 148, der Zahnritzelachsenschnittpunkt 144 und somit die Zahnritzelachsen 92 alle in der Ebene 146.

Prinzipiell ist es bei der erfindungsgemäßen Lösung denkbar, die außerhalb des Antriebsabschnitts 142 der Umlaufbahn 100 stehenden Zahnritzel, in Fig. 4 die Zahnritzel 90₂ bis 90₆, hinsichtlich ihrer Drehstellung um deren Zahnritzelachsen 92₂ bis 92₆ nicht zu definieren, solange kein Eingriff mit der Verzahnung 132 des Antriebsrades 130 erfolgt.

Um jedoch beim Einfahren des jeweiligen Zahnritzels 90 in den Antriebsabschnitt 142 sicherzustellen, daß die Zähne des jeweils in den Antriebsabschnitt 142 hineinbewegten Zahnritzels nicht derart mit der Verzahnung 132 kollidieren, so daß eine der Verzahnungen beschädigt wird, sind Maßnahmen vorzusehen, die ein kollisionsfreies Ineingriffbringen der Verzahnung 132 des Antriebsrades 130 und der Zähne des jeweiligen Zahnritzels 90 erlauben.

Beispielsweise wäre es denkbar, um derartige Kollisionen zu vermeiden, beim Bewegen des in den Antriebsabschnitt 142 auf der Umlaufbahn 100 hineinzubewegenden Zahnritzels 90 gleichzeitig das Antriebsrad 130 und somit die Verzahnung 132 mitzudrehen, und zwar mit einer geringfügigen schnelleren Umfangsgeschwindigkeit oder einer geringfügig langsameren Umfangsgeschwindigkeit als die Geschwindigkeit, mit welchem sich das entsprechende Zahnritzel 90 auf der Umlaufbahn 100 bewegt, so daß Kollisionen der stehenden Verzahnung 132 mit den Zähnen des stehenden Zahnritzels 90 vermieden werden können.

Noch vorteilhafter lassen sich derartige Kollisionen vermeiden, wenn eine in den Fig. 4, 5 und 6 dargestellte Führung 150 vorgesehen ist, welche alle Zahnritzel 90, die außerhalb des Antriebsabschnitts 142 auf der Umlaufbahn 100 stehen, in einer definitiven Drehstellung um ihre jeweilige Zahnritzelachse 92 führt. Diese Führung 150 ist, wie insbesondere in Fig. 7 dargestellt, als Zahnkranz 152 ausgebildet, dessen Zahnreihe 154 auf einer Zylinderfläche 156 um die Achse 64 verläuft und dessen Zahnreihe 154 so liegt, daß diese die jeweiligen Zahnritzel 90 in ihrem radial außenliegenden Verzahnungsbereich 158 erfassen, während die Verzahnung 132 in einem von dem Verzahnungsbereich 158 getrennten radial innenliegenden Verzahnungsbereich 160 der jeweiligen Zahnritzel 90 eingreift.

Die Führung 150 ist dabei stationär innerhalb des Trägerkörpers 70 angeordnet und vorzugsweise fest mit der Lagerhülse 118 verbunden, so daß die Führung 150 auch nicht mit dem Trägerkörper 70 um die Achse 64 drehbar ist und sich die mit dem Trägerkörper 70 auf der Umlaufbahn 100 bewegenden Zahnritzel 90 sich dann, wenn deren Verzahnungsbereich 158 mit der Zahnreihe 154 in Eingriff steht, auf der Führung 150 abwälzend bewegen.

Um innerhalb des Antriebsabschnitts 142 der Umlaufbahn 100 einen Antrieb des in diesem Antriebsabschnitt 142 stehenden Zahnritzels 90, beispielsweise in Fig. 7 des Zahnritzels 90₁, zuzulassen, weist der Zahnkranz 152, insbesondere dessen Zahnreihe 154 einen Ausschnitt 162 auf, so daß jedes innerhalb des Antriebsabschnitts 142 stehende Zahnritzel 90 relativ zum Zahnkranz 152 frei drehbar ist und somit durch die in den Verzahnungsbereich 160 desselben eingreifende Verzahnung 132 des Antriebsrades 130 antreibbar ist.

Wandert nun das entsprechende Zahnritzel, beispielsweise das Zahnritzel 90₁, aus der Umlaufstation U₁ heraus, so ist es innerhalb des Antriebsabschnitts 142 noch ohne Wechselwirkung mit dem Zahnkranz 152, so lange, bis eine von zwei Führungsübergabestellungen FL oder FR erreicht wird, die dadurch definiert sind, daß in diesen der jeweils erste Zahn 164L oder 164R der Zahnreihe 154 mit dem Verzahnungsbereich 158 des Zahnritzels 90, in diesem Fall des Zahnritzels 90₁, in Eingriff kommt und somit eine definierte Drehstellung des Zahnritzels 90₁ zum Zahnkranz 152 festgelegt und so lange aufrechterhalten wird, bis das Zahnritzel 90₁ wiederum eine der Führungsübergabestellungen FL oder FR erreicht und über diese in den Antriebsabschnitt 142 hineinbewegt wird.

In allen Stellungen zwischen den Führungsübergabestellungen FL und FR außerhalb des Antriebsabschnitts 142 wird das jeweilige Zahnritzel 90 durch die Zahnreihe 154 des Zahnkranzes 152 in einer definierten Drehstellung um seine jeweilige Zahnritzelachse 92 zu der Drehstellung um seine jeweilige Zahnritzelachse 92 in den Führungsübergabestellungen FL und FR gehalten, so daß unabhängig von der Abrollbewegung des jeweiligen Zahnritzels 90 auf dem Zahnkranz 152 dieses Zahnritzel 90 bei Erreichen einer der Führungsübergabestellungen FL und FR eine exakt definierte Drehstellung, nämlich die, die den Übergabestellungen FL und FR entspricht, aufweist.

Wird nun die Antriebseinheit 110 als C-Achsenantrieb, das heißt als Antrieb ausgebildet, mit welchem durch die Steuerung 58 jede beliebige Winkelstellung gesteuert anfahrbar ist, so läßt sich das Antriebsrad 130 mit der Verzahnung 132 durch die Steuerung 58, die gleichzeitig auch die Drehung des Trägerkörpers 70 um die Achse 64 steuert, so steuern, daß die Verzahnung 132 exakt passend zur Drehstellung des Zahnritzels 90 in der jeweiligen Führungsübergabestellung FL oder FR steht und somit kollisionsfrei mit dem Verzahnungsbereich 160 des Zahnritzels 90 in Eingriff kommt, während das jeweilige Zahnritzel 90 vollends in den Antriebsabschnitt 142 hineinbewegt wird und somit die drehfeste Verbindung zwischen dem Verzahnungsbereich 158 des Zahnritzels 90 und dem Zahnkranz 152 gelöst wird.

Somit besteht die Möglichkeit, in den Führungsübergabestellungen FL und FR den Verzahnungsbereich 160 des jeweiligen Zahnritzels 90 kollisionsfrei mit der Verzahnung 132 in Eingriff zu bringen, während die Verbindung zwischen dem Verzahnungsbereich 158 und den Zahnkranz 152 gelöst wird, oder den Verzahnungsbereich 158 mit dem Zahnkranz 152 kollisionsfrei in Eingriff zu bringen, während die Verbindung zwischen der Verzahnung 132 und dem Verzahnungsbereich 160 gelöst wird, wobei auch in diesem Fall durch die C-Achse die Möglichkeit besteht, durch geeignetes Drehen des Antriebsrades 130 mit der Verzahnung 132 das Zahnritzel 90 in der Führungsübergabestellung FL, FR genau in der Drehstellung zu übergeben, in welcher der jeweils erste Zahn 164L oder 164R mit dem Verzahnungsbereich 160 in Eingriff kommen kann.

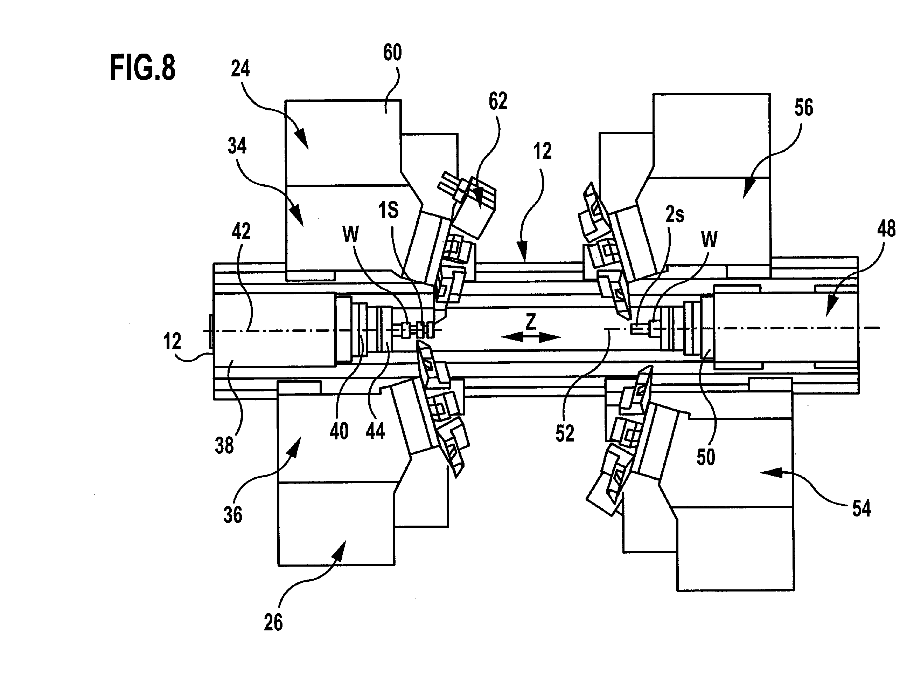

Bei einem zweiten Ausführungsbeispiel einer erfindungsgemäßen Werkzeugmaschine, dargestellt in den Fig. 8 bis 11, sind diejenigen Teile, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen wird und lediglich die Unterschiede gegenüber dem ersten Ausführungsbeispiel im Detail erläutert werden.

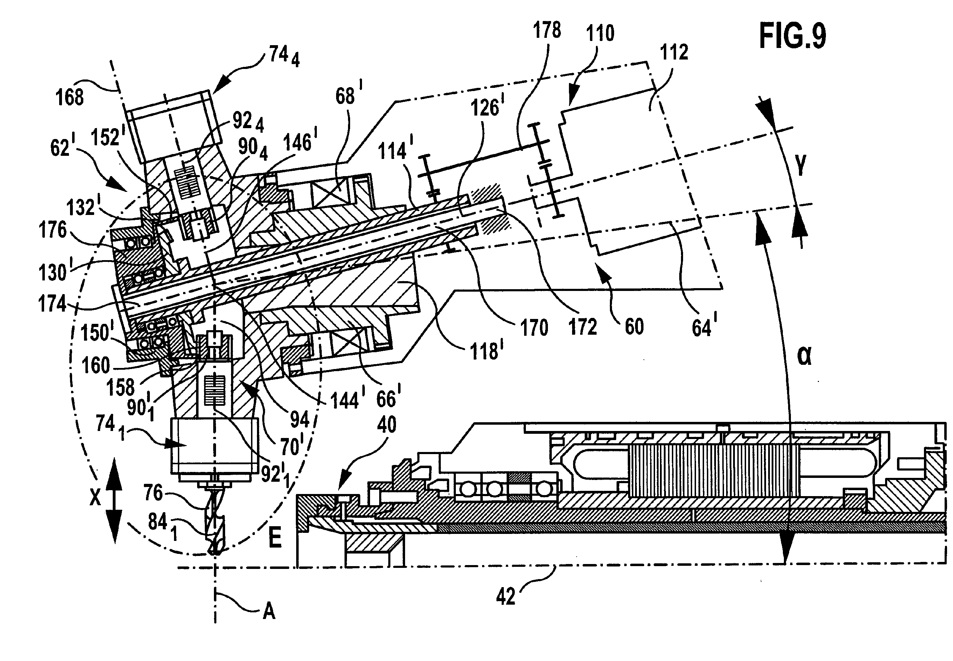

Wie in Fig. 8 und 9 dargestellt, verläuft bei dem zweiten Ausführungsbeispiel die Drehachse 64', um welche der Werkzeugträgerkopf 62' gegenüber dem Werkzeugträgergehäuse 60 drehbar ist, nicht parallel zur Spindelachse 42, sondern in einem Winkel α zu dieser.

Dies hat wiederum zur Folge, daß der Trägerkörper 70' des Werkzeugträgerkopfes 62' so ausgebildet ist, daß die Werkzeugeinheiten 74 sich in der Arbeitsstellung A der jeweiligen Werkzeugeinheit 74 mit ihren Werkzeugachsen 84, vorzugsweise senkrecht zur Spindelachse 42, und zwar in der sogenannten X-Richtung der Werkzeugmaschine erstrecken, so daß die Werkzeugachsen 84 weder senkrecht noch parallel zur Achse 64 verlaufen können.

Die in dem Innenraum 94 des Trägerkörpers 70' angeordneten Zahnritzel 90' liegen dabei mit ihren Zahnritzelachsen 92' zwar in einer zur Drehachse 64' symmetrischen Fläche 146', die jedoch in diesem Fall keine Ebene mehr darstellt, sondern eine kegelförmige Fläche mit der Achse 64' als Kegelachse.

Ferner schneiden sich die Zahnritzelachsen 92' ebenfalls in einem Zahnritzelachsenschnittpunkt 144', und dieser fällt gleichzeitig mit der Spitze der Kegelfläche 146' zusammen.

Zum Tragen des Werkzeugträgerkopfes 62' ist dieser vorzugsweise mit einem Radiallager 68' im Werkzeugträgergehäuse 60 gelagert.

Um eine nichtkoaxiale Anordnung des Antriebsrades 130' zu erreichen, ist in diesem Fall die Antriebsachse 126' nicht parallel versetzt zur Achse 64' angeordnet, sondern um einen spitzen Winkel y gegenüber dieser geneigt, wobei vorzugsweise die Antriebsachse 126' die Drehachse 64' im Zahnritzelachsenschnittpunkt 144' schneidet, der somit gleichzeitig ein Antriebsachsenschnittpunkt ist.

In diesem Fall durchsetzt die Antriebswelle 114' der Antriebseinheit 110' ebenfalls eine drehfest angeordnete Lagerhülse 118', welche sich jedoch durch eine drehbare Lagerung an an einem Lageransatz 66' des Werkzeugträgerkopfes 62' abstützt.

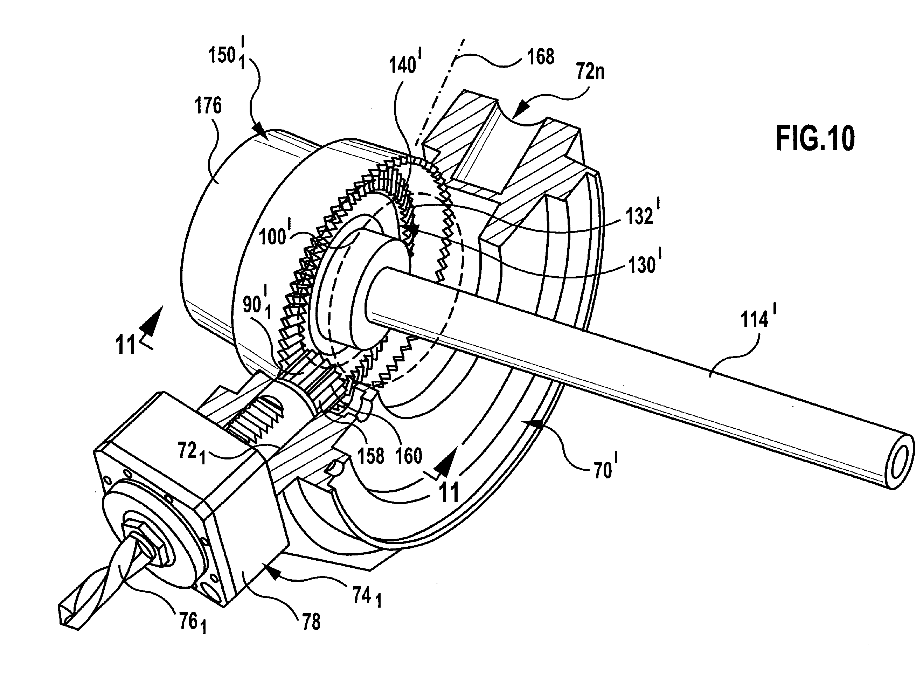

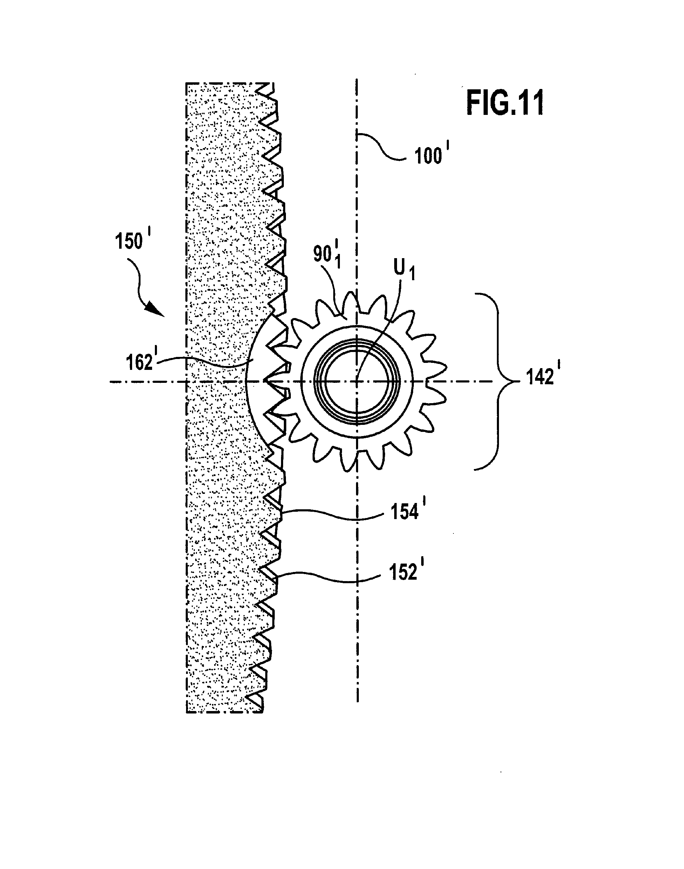

Zum Antrieb der Zahnritzel 90' durch ein um die zur Achse 64' nicht koaxiale Antriebsachse 126' drehbares Antriebsrad 130' mit einer Verzahnung 132' erstreckt sich das Antriebsrad 130' radial zur Antriebswelle 114' in einer Ebene 168, die gegenüber der Umlaufbahn 100', auf welcher die Zahnritzel 90' beim Drehen des Trägerkörpers 70' um die Achse 64' bewegbar sind, geneigt ist, so daß auch die Flugbahn 140' in dieser Ebene 168 (Fig. 9, 10) liegt und somit der Umlaufbahn 100' ebenfalls nur innerhalb des Antriebsabschnitts 142' (Fig. 11) so nahe kommt, daß ebenfalls nur im Bereich des Antriebsabschnitts 142' die Verzahnung 132' in Wechselwirkung mit dem in diesem Antriebsabschnitt 142' stehenden Ritzel 90' kommen kann und dieses antreiben kann.

In allen übrigen Stellungen eines der Ritzel 90' auf der Umlaufbahn 100' erfolgt keine Wechselwirkung zwischen der Verzahnung 132' und einem der Zahnritzel 90'.

Um außerdem ebenfalls für alle außerhalb des Antriebsabschnitts 142' stehenden Zahnritzel 90' eine Führung 105' vorzusehen, die den Zahnritzeln 90' eine definierte Drehstellung vermittelt, ist, wie in Fig. 10 und 11 dargestellt, der Zahnkranz 152' mit einer Zahnreihe 154' vorgesehen, wobei der Zahnkranz 152' ebenfalls den Ausschnitt 162' im Bereich des Antriebsabschnitts 142' aufweist, um eine Wechselwirkung zwischen dem innerhalb des Antriebsabschnitts 142' stehenden Zahnritzel 90' und dem Zahnkranz 152' zu vermeiden, so daß das zweite Ausführungsbeispiel hinsichtlich der Führung 150' im Zusammenspiel mit dem Antriebsrad 130' in gleicher Weise funktioniert, wie im Zusammenhang mit dem ersten Ausführungsbeispiel beschrieben, wobei ebenfalls die Antriebseinheit 110' als C-Achsenantrieb ausgebildet ist.

Um die Führung 150' drehfest zum Werkzeugträgergehäuse 60 anordnen zu können, so daß sich die Führung 150', in gleicher Weise wie beim ersten Ausführungsbeispiel, nicht mit dem Trägerkörper 70' um die Achse 64' mitdrehen kann, ist die Antriebswelle 114' als Hohlwelle ausgebildet und durch diese hindurch erstreckt sich eine Haltewelle 170, die an einem Ende 172 fest mit dem Werkzeugträgergehäuse 60 verbunden ist und am anderen Ende 174 drehfest mit einem Lagerkörper 176 verbunden ist, an welchem sich einerseits drehbar gelagert nochmal die Antriebswelle 114' abstützt und der seinerseits drehbar relativ zum Trägerkörper 70' gelagert ist, so daß sich der Trägerkörper 70' relativ zum Lagerkörper 176 drehen kann.

Ferner erfolgt der Antrieb der Antriebswelle 114' über einen Getriebezug 178 mittels des Antriebsmotors 112 der Antriebseinheit 110.

Vom ersten Ausführungsbeispiel unterscheidet sich das zweite Ausführungsbeispiel auch dadurch, daß das Antriebsrad 130' und die Führung 150' auf einer dem Werkzeugträgergehäuse 60 gegenüberliegenden Seite der Zahnritzel 90' angeordnet sind, während beim ersten Ausführungsbeispiel das Antriebsrad 130 und die Führung 150 auf der dem Werkzeugträgergehäuse 60 zugewandten Seite der Zahnritzel 90 angeordnet sind.

Hinsichtlich der Erläuterung der Funktion des zweiten Ausführungsbeispiels im einzelnen, insbesondere hinsichtlich des Ineingriffbringens des jeweiligen Zahnritzels 90' mit der Verzahnung 132' des Antriebsrades 130' oder der Zahnreihe 154' des Zahnkranzes 152' wird vollinhaltlich auf die Ausführungen zum ersten Ausführungen Bezug genommen.

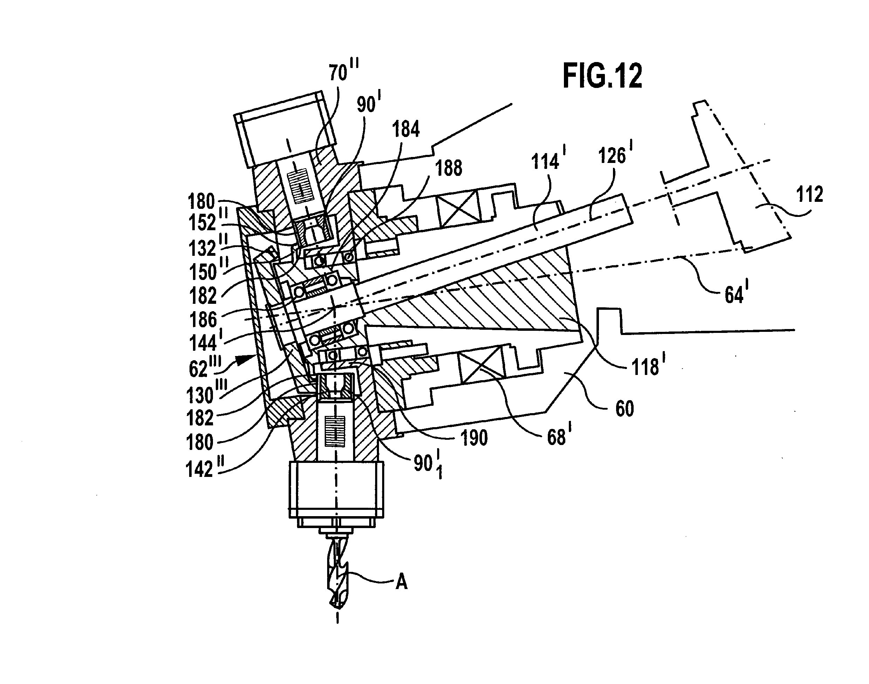

Ein drittes Ausführungsbeispiel einer erfindungsgemäßen Werkzeugmaschine, dargestellt in Fig. 12, stellt eine Abwandlung des zweiten Ausführungsbeispiels dar.

In Abwandlung des zweiten Ausführungsbeispiel ist bei dem dritten Ausführungsbeispiel das Antriebsrad 130" so ausgebildet, daß im Antriebsabschnitt 142" die Verzahnung 132" des Antriebsrads 130" in einen Verzahnungsbereich 180 des in der Arbeitsstellung A stehenden Zahnritzels 90'₁ eingreift, welcher auf einer der Antriebswelle 114' abgewandten Seite eines Verzahnungsbereichs 182 liegt, in welchen die Führung 150" mit ihrem Zahnkranz 152" eingreift.

Damit besteht die Möglichkeit, die Führung 150" starr mittels einer Haltehülse 184 mit der Lagerhülse 118' zu verbinden, wobei innerhalb der Haltehülse 184 die Antriebswelle 114' mittels eines Drehlagers 186 um die Antriebsachse 126' drehbar gelagert ist.

Ferner ist die Haltehülse 184 ihrerseits nochmals durch ein Drehlager 188 an dem Trägerkörper 70" abgestützt, der hierzu mit einem Stützflansch 190 versehen ist, welcher bezüglich der Achse 64' radial innerhalb der Zahnritzel 90' verläuft, die wie in der beschriebenen Art und Weise auf der Umlaufbahn 100 um die Achse 64' durch Drehen des Trägerkörpers 70' bewegbar sind.

Im übrigen wird hinsichtlich des Zusammenwirkens zwischen der Führung 150" und der Verzahnung 132" vollinhaltlich auf die voranstehenden Ausführungsbeispiele Bezug genommen.

## Patentansprüche

1. Werkzeugmaschine umfassend ein Maschinengestell (10), einen Werkzeugträger (34) mit einem Werkzeugträgergehäuse (60) und einem um eine Achse (64) drehbar am Werkzeugträgergehäuse (60) gelagerten Werkzeugträgerkopf (62), welcher einen Trägerkörper (70) mit einer Vielzahl von Werkzeugaufnahmen (72) aufweist, in welche antreibbare Werkzeugeinheiten (74) so einsetzbar sind, daß Zahnritzel (90) zum Antrieb aller in die Werkzeugaufnahmen (72) einsetzbaren Werkzeugeinheiten (74) in einem Innenraum (94) des Trägerkörpers (70) auf einer um die Achse (64) herum verlaufenden Umlaufbahn (100) angeordnet sind und beim Drehen des Werkzeugträgerkopfes (62) auf der Umlaufbahn (100) bewegbar sind, einen Werkzeugantrieb (110) mit einem in dem Innenraum (94) des Trägerkörpers (70) angeordneten und durch einen Antriebsmotor (112) antreibbaren Antriebsrad (130), mit welchem mindestens eines der Zahnritzel (90) antreibbar ist,
**dadurch gekennzeichnet, daß** das Antriebsrad (130) um eine Antriebsachse (126) drehbar ist, die nichtkoaxial zur Achse (64) angeordnet ist, daß sich eine Verzahnung (132) des Antriebsrads (130) auf einer Flugbahn (140) um die Antriebsachse (126) bewegt, die relativ zur Umlaufbahn (100) der Zahnritzel (90) so verläuft, daß in einem Antriebsabschnitt (142) der Umlaufbahn (100) die Abstände zwischen dieser und der Flugbahn (140) die geringsten Werte aufweisen und in allen anderen Abschnitten der Umlaufbahn (100) größer sind und daß die Verzahnung (132) mit einem in dem Antriebsabschnitt (142) stehenden Zahnritzel (90) in Antriebseingriff steht sowie zu jedem außerhalb des Antriebsabschnitts (142) auf der Umlaufbahn (100) stehenden Zahnritzel (90) berührungslos verläuft.

2. Werkzeugmaschine nach Anspruch 1, **dadurch gekennzeichnet, daß** der Werkzeugträgerkopf (62) für jede in eine der Werkzeugaufnahmen (72) einsetzbare angetriebene Werkzeugeinheit (74) dieselben Arbeitsstellungen (A) aufweist, und daß bei jeder in diesen Arbeitsstellungen (A) stehenden Werkzeugeinheit (74) der Zahnritzel (90) innerhalb des Antriebsabschnitts (142) steht.

3. Werkzeugmaschine nach Anspruch 2, **dadurch gekennzeichnet, daß** jede Werkzeugeinheit (74) des Werkzeugträgerkopfes (62) eine durch eine feste Winkelposition festgelegte Arbeitsstellung (A) aufweist, in welcher das Zahnritzel (90) auf der Umlaufbahn (100) in einer Umlaufstation (U₁) steht, und das mindestens die Umlaufstation (U₁) innerhalb des Antriebsabschnitts (142) liegt.

4. Werkzeugmaschine nach Anspruch 3, **dadurch gekennzeichnet, daß** nur eine einzige Umlaufstation (U₁) innerhalb des Antriebsabschnitts (142) liegt.

5. Werkzeugmaschine nach einem der voranstehenden Ansprüche, **dadurch gekennzeichnet, daß** die Zahnritzel (90) so angeordnet sind, daß deren Zahnritzelachsen (92) die Achse (64) schneiden.

6. Werkzeugmaschine nach Anspruch 5, **dadurch gekennzeichnet, daß** die Zahnritzelachsen (92) in einem gemeinsamen Zahnritzelachsenschnittpunkt (144) miteinander die Achse (64) schneiden.

7. Werkzeugmaschine nach einem der voranstehenden Ansprüche, **dadurch gekennzeichnet, daß** die Antriebsachse (126) parallel versetzt zu der Achse (64), um welche der Werkzeugträgerkopf (62) drehbar ist, angeordnet ist.

8. Werkzeugmaschine nach einem der Ansprüche 1 bis 6, **dadurch gekennzeichnet, daß** die Antriebsachse (126') in einem Winkel (γ) zu der Achse (64) verläuft, um welche der Werkzeugträgerkopf (62) drehbar ist.

9. Werkzeugmaschine nach Anspruch 8, **dadurch gekennzeichnet, daß** die Antriebsachse (126') und die Achse (64) sich in einem Antriebsachsenschnittpunkt (144) schneiden.

10. Werkzeugmaschine nach Anspruch 9, **dadurch gekennzeichnet, daß** der Antriebsachsenschnittpunkt und der Zahnritzelachsenschnittpunkt (144') zusammenfallen.

11. Werkzeugmaschine nach einem der voranstehenden Ansprüche, **dadurch gekennzeichnet, daß** der das Antriebsrad (130) durchsetzende Bereich der Antriebsachse (126) auf einer dem Antriebsabschnitt (142) der Umlaufbahn (100) zugewandten Seite der Achse (64) verläuft.

12. Werkzeugmaschine nach einem der voranstehenden Ansprüche, **dadurch gekennzeichnet, daß** die Antriebsachse (126) und die Achse (64) in einer Ebene liegen.

13. Werkzeugmaschine nach Anspruch 12, **dadurch gekennzeichnet, daß** die Ebene parallel zur X-Achse der Werkzeugmaschine verläuft.

14. Werkzeugmaschine nach einem der voranstehenden Ansprüche, **dadurch gekennzeichnet, daß** der Werkzeugantrieb (110) als mittels einer Steuerung steuerbarer C-Achsenantrieb ausgebildet ist.

15. Werkzeugmaschine nach einem der voranstehenden Ansprüche, **dadurch gekennzeichnet, daß** die Verzahnung (132) des Antriebsrads (130) und das mit dieser in Eingriff zu bringende Zahnritzel (90) vor dem Ineingriffbringen in eine definierte Drehstellung relativ zueinander bringbar sind.

16. Werkzeugmaschine nach Anspruch 15, **dadurch gekennzeichnet, daß** eine Führung (150) vorgesehen ist, welche beim Drehen des Werkzeugträgerkopfes (62) das sich in die Verzahnung (132) des Antriebsrads (130) hineinbewegende Zahnritzel (90) so vorpositioniert, daß es im wesentlichen kollisionsfrei mit der Verzahnung (132) des Antriebsrads (130) in Eingriff bringbar ist.

17. Werkzeugmaschine nach Anspruch 16, **dadurch gekennzeichnet, daß** die Führung (150) das Zahnritzel (90) vor dem Ineingriffbringen mit der Verzahnung (132) des Antriebsrads (130) in eine definierte Drehstellung relativ zur Verzahnung (132) des Antriebsrades (130) bringt.

18. Werkzeugmaschine nach Anspruch 17, **dadurch gekennzeichnet, daß** die Führung (150) das Zahnritzel (90) drehend mit der Verzahnung (132) des Antriebsrads (130) in Eingriff bringt.

19. Werkzeugmaschine nach einem der voranstehenden Ansprüche, **dadurch gekennzeichnet, daß** jedes Zahnritzel (90) beim Verlassen des Antriebsabschnitts (142) und beim Eintreten in den Antriebsabschnitt (142) jeweils eine Führungsübergabestellung (FL, FR) durchläuft und daß jedes Zahnritzel außerhalb des Antriebsabschnitts (142) zwischen den Führungsübergabestellungen (FL, FR) in stets definierter Drehstellung zu diesen Führungsübergabestellungen (FL, FR) steht.

20. Werkzeugmaschine nach Anspruch 19, **dadurch gekennzeichnet, daß** die definierte Drehstellung zu den Führungsübergabestellungen (FL, FR) durch eine Führung (150) aufrecht erhalten wird.

21. Werkzeugmaschine nach Anspruch 20, **dadurch gekennzeichnet, daß** die Führung (150) die Zahnritzel (90) in definierter Drehstellung weiterdreht.

22. Werkzeugmaschine nach einem der Ansprüche 16 bis 21, **dadurch gekennzeichnet, daß** die Führung (150) drehfest gegenüber dem Werkzeugträgergehäuse (60) angeordnet ist.

23. Werkzeugmaschine nach einem der Ansprüche 16 bis 22, **dadurch gekennzeichnet, daß** die Führung (150) und das Antriebsrad auf derselben Seite der Umlaufbahn (100) angeordnet sind.
